# FASCICULE DE BREVET EUROPEEN

(11) **EP 0 852 706 B1**
(45) Date de publication et mention de la délivrance du brevet: **18.05.2011**
(21) Numéro de dépôt: 97935618.5
(22) Date de dépôt: 24.07.1997
(51) Int. Cl.: G01F 23/36, G01F 1/36

(54) **DISPOSITIF DE JAUGEAGE DE CARBURANT POUR RESERVOIR DE VEHICULE AUTOMOBILE**
KRAFTSTOFFMESSSYSTEM FÜR FAHRZEUGTANK
FUEL GAUGING SYSTEM FOR A MOTOR VEHICLE FUEL TANK

(30) Priorité: 26.07.1996 FR 9609433
(43) Date de publication de la demande: 15.07.1998
(73) Titulaire: TI Automotive Fuel Systems SAS, 51009 Châlons-en-Champagne (FR)
(72) Inventeur: BRUNEL, Daniel, F-51000 Châlons-en-Champagne (FR)
(74) Mandataire: Texier, Christian
(86) Numéro de dépôt international: PCT/FR1997/001383
(87) Numéro de publication internationale: WO 1998/004890

(56) Documents cités:
- FR-A- 2 656 419
- FR-A- 2 661 498
- GB-A- 2 270 760
- US-A- 5 341 679

## Description

La présente invention concerne le domaine des dispositifs de jaugeage de carburant pour réservoirs de véhicules automobiles.

Plus précisément, la présente invention concerne les dispositifs de jaugeage du type connu comprenant un boîtier qui porte un élément résistif, un bras monté à déplacement sur le boîtier et comportant au moins un curseur qui repose sur l'élément résistif et un levier muni d'un flotteur, relié au bras pour contrôler les déplacements de celui-ci.

De nombreux dispositifs de ce genre ont déjà été proposés.

On pourra par exemple se référer aux documents FR-A-2661498, US-A-4870861, DE-A-3627116, GB-A-2083628, FR-A-2533G94, GB-A-1159806, GB-A-2048495, EP-A-0007072, FR-A-2364599, US-A-1771794, US-A-300646, US-A-5 341 679

Le document FR - A - 2 661 498 divulgue un dispositif conforme au préambule de la revendication 1 annexée.

Le document US - A - 5 341 679 divulgue un dispositif de jaugeage comprenant un boîtier qui porte un élément résistif, un bras qui porte un curseur reposant sur l'élément résistif et un levier muni d'un flotteur qui suit les évolutions de carburant, lequel levier est relié au bras et comporte une branche assurant le pivotement fonctionnel du bras. Une languette électriquement conductrice est fixée sur le boîtier pour immobiliser le bras à translation.

La présente invention a maintenant pour but de perfectionner les dispositifs de jaugeage de carburant connus.

La présente invention a en particulier pour but de simplifier l'assemblage des dispositifs de jaugeage.

Un autre but de la présente invention est de limiter l'encombrement initial du boîtier qui loge l'élément résistif afin d'une part de faciliter les tests avant installation sur véhicule, et d'autre part de faciliter le stockage des dispositifs.

Un autre but de la présente invention est d'améliorer la fiabilité des dispositifs de jaugeage connus.

Ces buts sont atteints selon la présente invention grâce à un dispositif de jaugeage de carburant du type défini en revendication 1 annexée, laquelle est délimitée sous forme d'un préambule et d'une partie caractérisante par rapport au document FR-A-2 661 498.

D'autres caractéristiques, buts et avantages de la présente invention, apparaîtront à la lecture de la description détaillée qui va suivre, et en regard des dessins annexés donnés à titre d'exemple non limitatif et sur lesquels :
- la figure 1 représente une vue schématique en perspective d'un dispositif de jaugeage de carburant conforme à la présente invention,
- la figure 2 représente une vue schématique en perspective d'un bras pivotant équipant ce dispositif,
- la figure 3 représente une vue en plan du même bras,
- la figure 4 représente une vue en plan du dispositif de jaugeage de la figure 1,
- les figures 5 et 6 représentent deux vues en coupe de ce dispositif selon les plans de coupe référencés V - V et VI - VI sur la figure 4.

Comme on l'a indiqué précédemment, le dispositif de jaugeage, conforme à la présente invention, comprend essentiellement : un boîtier 100, un élément résistif 200, un bras pivotant 300 et un levier 400.

Le boîtier 100 peut faire l'objet de nombreuses variantes de réalisations. De préférence, il est réalisé d'une pièce par moulage de matière plastique. En variante, cependant, le boitier 100 peut être réalisé par assemblage de plusieurs pièces.

Pour l'essentiel, le boîtier 100 est constitué d'une cage comportant une paroi de base 102 plane perpendiculaire à l'axe de pivotement O-O du bras 300 et d'une cloison 104 de bordure périphérique transversale à la paroi de base 102 er parallèle à l'axe de pivotement O-O.

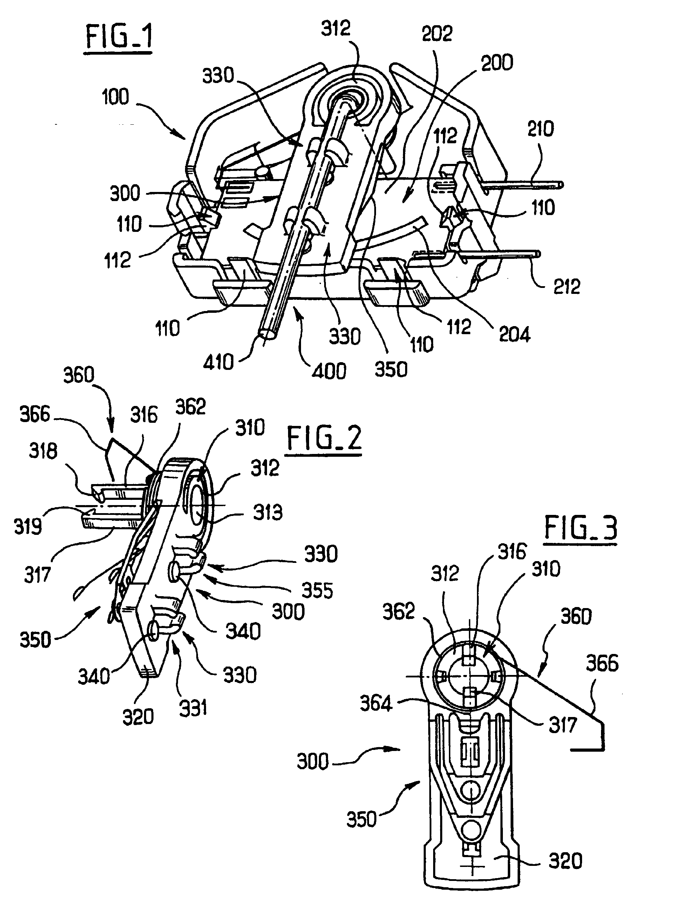

Comme on le voit notamment sur les figures 1, 4 et 5, de préférence le boîtier 100 est muni à proximité de la bordure 104, et sur l'intérieur de celle-ci, d'une pluralité de languettes élastiques à dentures 110 conçues pour maintenir élastiquement l'élément résistif 200.

Selon le mode de réalisation particulier et non limitatif illustré sur les figures annexées il est ainsi prévu quatres languettes élastiques 110. Celles-ci s'étendent à partir de la paroi de base 102, sensiblement parallèlement à la paroi de bordure 104 en direction du contour d'ouverture de la cage 100. Chaque languette 110 est munie d'une denture 112 au niveau de son extrémité libre opposée à la paroi de base 102.

Le boîtier 100 possède, en outre, venu de moulage avec la paroi de base 102, un canon cylindrique 120. Celui-ci est centré sur l'axe O-O et possède un canal cylindrique central 122. Le canon 120 s'étend ainsi perpendiculairement à la paroi de base 102, de préférence à proximité de la paroi périphérique 104.

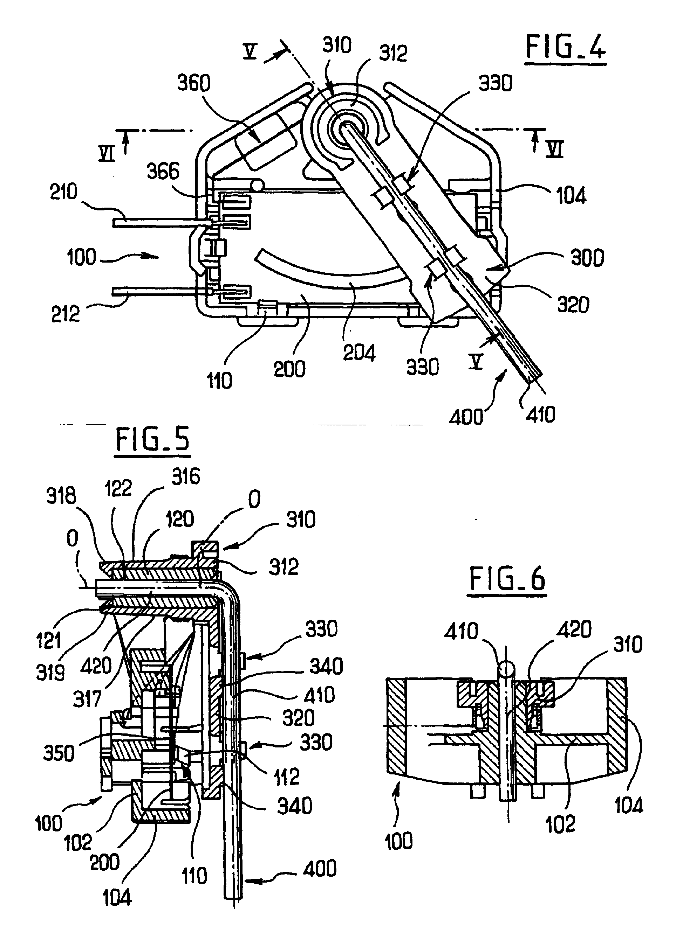

On notera que l'extrémité axiale du canal 122 dirigée vers le contour d'ouverture du boîtier 100 est évasée (voir notamment figures 5 et 6) pour faciliter l'introduction du levier 400.

L'élément résistif 200 est formé de préférence d'une plaque plane 202 de circuit imprimé pourvue d'un revêtement définissant une piste résistive 204. Les extrémités ou des zones choisies de cette piste résistive 204 sont reliées à des broches 210-212 qui traversent la paroi de bordure 104 du boîtier pour être accessibles à l'extérieur.

Le contour de la plaque 202, de préférence rectangulaire, est complémentaire de l'espace défini entre les languettes 110.

L'homme de l'art comprendra que la plaquette de circuit imprimé 200 peut être engagée dans le boîtier 100, en position parallèle à la paroi de base 102, par simple translation selon une direction perpendiculaire à la paroi de base 102. La plaquette de circuit imprimé 200 est automatiquement maintenue par les languettes 110 lorsqu'elle franchit les dentures 112 de celles-ci.

Le bras 300 est réalisé de préférence d'une pièce par moulage de matière plastique.

Selon le mode de réalisation particulier et non limitatif illustré sur les figures annexées, le bras 300 comprend un moyeu 310 et une patte radiale 320.

Le moyeu 310 est formé essentiellement d'une bague 312 cylindrique munie de deux lamelles d'encliquetage 316-317. La bague 312 possède une surface interne 313 cylindrique de révolution, de rayon complémentaire du rayon externe du canon 120.

Ainsi le moyeu 310 assure le guidage à rotation du bras 300 sur le boîtier 100 lorsque la bague 312 est engagée sur le canon 120.

Les deux lamelles 316-317 s'étendent parallèlement à l'axe du moyeu 310. Elles sont de préférence diamétralement opposées par rapport à celui-ci. Les lamelles 316-317 sont munies chacune, à leur extrémité libre opposée à la bague 312, d'une denture 318-319 dirigée radialement vers l'intérieur, c'est-à-dire dirigée vers l'axe du moyeu 310. Comme on le voit sur la figure 5, la localisation des dentures 318-319 sur les lamelles 316-317 est telle que ces dentures 318-319 reposent sur l'extrémité axiale arrière 121 du canon 120 lorsque le bras 300 est installé en position sur le boîtier 100.

Ainsi les lamelles 316 - 317 équipées de dentures 318-319 assurent la fonction d'immobilisation à translation du bras 300 sur le boîtier 100 lorsque le moyeu 310 est engagé sur le canon 120.

La patte 320 est rectiligne et plane. Elle s'étend perpendiculairement à l'axe du moyeu 310, soit radialement par rapport à celui-ci.

Comme on le voit sur les figures 2 et 5, pour faciliter l'engagement du bras 300 sur le canon 120, les surfaces radialement internes des dentures 318-319 dirigées à l'opposé de la bague 312 sont bisautées en direction de la bague 312 dans le sens du rapprochement de l'axe de celle-ci.

Ainsi, lors de l'assemblage du bras 300 sur le boîtier 100, les lamelles 316-317 sont tout d'abord déformées radialement vers l'extérieur, jusqu'au franchissement de l'extrémité axiale 121 du canon 120 par les dentures 318-319. Une fois cette position atteinte, les lamelles 316-317 reprennent leur position d'origine. La bague 312 est alors engagée sur l'extérieur du canon 120 pour assurer le guidage à rotation du bras 300 et les dentures 318-319 viennent reposer sur l'extrémité axiale 121 du canon 120 pour assurer l'immobilisation à translation du bras 300.

Dans cet état, on obtient un système susceptible d'être testé. C'est-à-dire que le bras 300 peut être pivoté autour de son axe de rotation O-O sur le boîtier 100 pour vérifier l'information disponible entre les broches de sortie 210-212, et le cas échéant, ajuster la piste résistive 204 pour obtenir la réponse souhaitée en fonction du pivotement du bras 300. Un tel test et ajustement sont autorisés à ce stade de l'assemblage, selon l'invention, bien que le levier 400 ne soit pas encore placé sur le dispositif, grâce au fait que le bras 300 est guidé à rotation avec précision autour de son axe et maintenu en translation. Une telle étape d'ajustement connue en elle-même de l'homme de l'art et réalisée par exemple par attaque localisée (au laser ou autre) de la piste 204, ne sera pas décrite par la suite. Cependant, on notera que dans cet état, le système présente un faible encombrement puisque le levier 400 n'est pas disposé sur le boîtier 100.

Bien entendu le bras 300 est pré-équipé du curseur 350 électriquement conducteur coopérant avec la piste résistive 204. Ce curseur peut faire l'objet de plusieurs modes de réalisation connus de l'homme de l'art.

Il peut comprendre deux lamelles élastiques reposant sur une piste 204 commune à des fins de redondance et de fiabilité. Il peut encore comprendre deux lamelles élastiques reposant sur des pistes résistives ou respectivement résistive et électriquement conductrice, différentes. Selon encore une autre variante, telle qu'illustrée sur les figures annexées, le curseur 350 peut être relié en permanence à une borne du circuit imprimé 200 grâce à un fil 360 enroulé en spirale 362 autour du moyeu 310. L'une des extrémités 364 du fil 360 est reliée directement au curseur 350 tandis que la seconde extrémité 366 du fil 360 est reliée à une borne du circuit imprimé 200.

Selon l'invention, le levier 400 possède une forme générale de L comprenant un brin principal 410 et un brin secondaire 420 de plus faible longueur. Le brin principal 410 est conçu pour recevoir à l'une de ses extrémités un flotteur adapté pour suivre les évolutions du niveau de carburant dans le réservoir. Un tel flotteur classique en soit n'est pas illustré sur les figures annexées pour simplifier l'illustration.

Le brin auxiliaire 420 est prévu à la seconde extrémité du brin principal 410.

Le diamètre externe du brin auxiliaire 420 est complémentaire du diamètre du canal interne 122 formé dans le canon 120.

Ainsi, le levier 400 assure, par l'intermédiaire de son brin auxiliaire 420, l'axe de pivotement fonctionnel du dispositif, c'est-à-dire que le brin 420 assure le guidage à rotation fonctionnelle du levier 400 et du bras 300 sur le boîtier 100, plus précisément par rapport au canon 120.

A cette fin, il est prévu des moyens de réception 330 sur le bras 320 assurant l'immobilisation du levier 400.

Ces moyens d'immobilisation 330 peuvent faire l'objet de nombreux modes de réalisation.

Selon le mode de réalisation particulier illustré sur les figures annexées, ces moyens 330 comprennent deux pinces 331, 335, formées chacune de deux machoires incurvées en saillie sur la surface extérieure du bras 300, plus précisément de la patte radiale 320, et conçues de façon connue en soi pour emprisonner le brin principal 410 du levier. Les machoires précitées des pinces 331, 335 sont venues de moulage sur le bras 320. Elles sont orientées pour recevoir le brin principal 410 du levier 400 orienté radialement par rapport à l'axe de pivotement O-O.

De préférence, la patte 320 possède des plots en saillie 340 sur lesquels repose le brin 410, une fois installée.

L'homme de l'art comprendra que le dispositif conforme à la présente invention peut être assemblé par simple translation de l'ensemble de ses composants (successivement plaque 200, bras 300 et levier 400) parallèlement à l'axe O-O, sur le boîtier 100. Un tel assemblage par translation selon un axe unique permet un montage simple par automate.

En outre, la possibilité de tester et d'ajuster le dispositif avant mise en place du levier 400 permet de limiter l'encombrement du dispositif et de faciliter le stockage.

De plus, la présente invention permet de réaliser un dispositif de jaugeage comprenant un ensemble : boîtier 100 - plaque 200 - bras 300, standard, susceptible d'être personnalisé par ajustage de la piste 204 et équipement d'un levier 400 adapté spécifiquement à l'application particulière retenue, au dernier moment, avant installation sur un véhicule identifié.

## Revendications

1. Dispositif de jaugeage de carburant, pour réservoir de véhicule automobile, comprenant un boîtier (100) qui porte un élément résistif (200), un bras (300) monté à pivotement sur le boîtier (100) autour d'un axe (O-O) et comportant au moins un curseur (350) qui repose sur l'élément résistif (200), un levier (400) muni d'un flotteur et relié au bras (300) pour contrôler les déplacements de celui-ci, en suivant les évolutions du niveau de carburant dans le réservoir grâce au flotteur, le boîtier (100) et le bras (300) comportant des moyens (316)-(317)-(318)-(319) d'immobilisation à translation du bras (300) sur le boîtier (100) et le bras (300) étant adapté pour recevoir le levier (400), lequel a une forme en L à deux branches, l'une des branches (420) du levier (400) assurant le pivotement fonctionnel du dispositif autour dudit axe (O-O), **caractérisé par le fait que** le bras (300) porte un moyeu cylindrique (310)-(312) de diamètre complémentaire de celui d'un canon (120) solidaire du boîtier (100), centré sur ledit axe (O-O)
formant des moyens complémentaires (120), (310) de guidage à rotation autour dudit axe (O-O),
et que les moyens d'immobilisation à translation du bras (300) sur le boîtier (100) sont formés de languettes d'encliquetage (307)-(317)-(318)-(319) solidaires du bras (300), et munies chacune d'une denture (318)-(319) à son extrémité adaptée pour coopérer avec le canon (120) solidaire du boîtier (100) et centré sur ledit axe (O-O), en formant une butée axiale pour ce canon (120).

2. Dispositif selon la revendication 1, **caractérisé par le fait que** les languettes sont au nombre de deux et sont élastiques (316)-(317), diamétralement opposées par rapport à l'axe (O-O) de pivotement du bras (300).

3. Dispositif selon l'une des revendications 1 ou 2, **caractérisé par le fait que** les dentures des languettes (307)-(317) ont leur extrémité biseautée pour faciliter l'engagement sur le canon (120) solidaire du boîtier (100).

4. Dispositif selon l'une des revendications 1 à 3, **caractérisé par le fait que** le boîtier (100) est constitué d'une cage comportant une paroi de base (102) solidaire du canon (120) qui lui est perpendiculaire.

5. Dispositif selon la revendication 1, **caractérisé par le fait que** le boîtier (100) comprend un canon (120) possédant un canal central interne (122) de diamètre complémentaire de la branche (420) du levier (400) assurant le pivotement fonctionnel du dispositif.

6. Dispositif selon la revendication 1, **caractérisé par le fait que** le boîtier (100) comporte plusieurs languettes élastiques (110)-(112) adaptées pour assurer un maintien de l'élément résistif (200).

7. Dispositif selon la revendication 6, **caractérisé par le fait que** les languettes élastiques (110)-(112) de maintien de l'élément résistif (200) s'étendent perpendiculairement à la paroi de base (102) et parallèlement à l'axe du canon (120) recevant à pivotement le bras (300) pour permettre un engagement de l'ensemble des composants du dispositif selon une translation parallèle à l'axe (O-O) de pivotement du bras (300).

8. Dispositif selon la revendication 1, **caractérisé par le fait que** le bras (300) comporte
une patte (320) radiale par rapport audit axe (O-O) pourvue de moyens d'immobilisation d'une branche (410) du levier (400).

9. Dispositif selon la revendication 8, **caractérisé par le fait que** les moyens d'immobilisation (330) sont formés de pinces élastiques venues de moulage sur le bras (300),

## Claims

1. Fuel gauging device for a motor vehicle tank, comprising a housing (100) which bears a resistive element (200), an arm (300) mounted so that it can pivot on the housing (100) about an axis (O-O) and comprising at least one cursor (350) which rests against the resistive element (200), a lever (400) fitted with a float and connected to the arm (300) to control the movements thereof, accompanying the changes in level of fuel in the tank via the float, the housing (100) and the arm (300) comprising means (316) - (317) - (318) - (319) for translationally immobilizing the arm (300) on the housing (100) and the arm (300) being adapted to receive the lever (400), which lever is L-shaped with two branches, one of the branches (420) of the lever (400) providing the functional pivoting of the device about the said axis (O-O),
**characterized in that** the arm (300) carries a cylindrical hub (310)-(312) of a diameter that complements that of a bushing (120) secured to the housing (100), centred on the said axis (O-O) and forming complementary means (120), (310) for rotational guidance about said axis (O-O) and **in that** the means of translationally immobilizing the arm (300) on the housing (100) are formed of snap-fit tabs (307)-(317)-(318)-(319) secured to the arm (300) and each having a tooth (318)-(319) at its end which is adapted to interact with the bushing (120) secured to the housing (100) and centred on the said axis (O-O), thereby forming an axial end-stop for this bushing (120).

2. Device according to Claim 1, **characterized in that** the tabs are two in number and are elastic (316)-(317), being diametrically opposed relative to the axis (O-O) of pivoting of the arm (300).

3. Device according to either of Claims 1 and 2, **characterized in that** the teeth of the tabs (307)-(317) have their ends bevelled to facilitate engagement with the bushing (120) secured to the housing (100).

4. Device according to one of Claims 1 to 3, **characterized in that** the housing (100) consists of a cage comprising a base wall (102) secured to the bushing (120) which is perpendicular to it.

5. Device according to Claim 1, **characterized in that** the housing (100) comprises a bushing (120) which has an internal central passage (122) of a diameter that complements the branch (420) of the lever (400) forming the functional pivot axis of the device.

6. Device according to Claim 1, **characterized in that** the housing (100) comprises several elastic tabs (110)-(112) adapted to hold the resistive element (200).

7. Device according to Claim 6, **characterized in that** the elastic tabs (110)-(112) for holding the resistive element (200) run perpendicular to the base wall (102) and parallel to the axis of the bushing (120) accommodating, with pivoting, the arm (300) so as to allow all of the components of the device to be engaged by a translational movement parallel to the axis (O-O) of pivoting of the arm (300).

8. Device according to Claim 1, **characterized in that** the arm (300) comprises a foot (320) which is radial in relation to the said axis (O-O) and is provided with means for immobilizing a main leg (410) of the lever (400).

9. Device according to Claim 8, **characterized in that** the immobilizing means (330) are formed of elastic grippers molded integrally on the arm (300).

## Patentansprüche

1. Kraftstoffmessvorrichtung für einen Kraftfahrzeugtank, mit einem Gehäuse (100), welches trägt: ein Widerstandselement (200), einen Arm (300), der schwenkbar um eine Achse (O-O) an dem Gehäuse (100) angebracht ist und einen auf dem Widerstandselement (200) aufliegenden Schleifkontakt (350) aufweist, einen Hebel (400), der mit einem Schwimmer versehen und mit dem Arm (300) verbunden ist, um die Bewegungen desselben entsprechend der Entwicklung des Kraftstoffpegels in dem Tank mittels des Schwimmers zu kontrollieren, wobei das Gehäuse (100) und der Arm (300) Einrichtungen (316)-(317)-(318)-(319) zum Festlegen des Arms (300) auf dem Gehäuse (100) aufweisen, und der Arm (300) zum Aufnehmen des Hebels (400) geeignet ist, welcher die Form eines L mit zwei Schenkeln aufweist, wobei einer der Schenkel (420) des Hebels (400) das funktionsgemäße Schwenken der Vorrichtung um die Achse (O-O) gewährleistet, **dadurch gekennzeichnet, dass** der Arm (300) eine zylindrische Nabe (310)-(312) mit einem Durchmesser aufweist, welcher zu demjenigen einer fest mit dem Gehäuse (100) verbundenen, auf die Achse (O-O) zentrierten Buchse (120) komplementär ist, wobei diese komplementäre Einrichtungen (120), (310) zum Führen der Drehung um die Achse (O-O) bilden, und dass die Einrichtungen zum Fixieren des Arms (300) auf dem Gehäuse (100) durch fest mit dem Arm (300) verbundene und jeweils mit einem Zahn (318)-(319) an ihrem Ende versehene Schnappzungen (307)-(312)-(318)-(319) gebildet sind, die zum Zusammenwirken mit der fest mit dem Gehäuse (100) verbundenen und auf die Achse (O-O) zentrierten Buche (120) geeignet sind, wobei sie einen axialen Anschlag für die Buchse (120) bilden.

2. Vorrichtung nach Anspruch 1, **dadurch gekennzeichnet, dass** zwei elastische Zungen (316)-(317) vorgesehen sind, welche einander in Bezug auf die Schwenkachse (O-O) des Arms (300) diametral gegenüberliegen.

3. Vorrichtung nach einem der Ansprüche 1 oder 2, **dadurch gekennzeichnet, dass** die Zähne der Zungen (307)-(317) jeweils abgeschrägte Enden aufweisen, um das Angreifen an der fest mit dem Gehäuse (100) verbundenen Buchse (120) zu erleichtern.

4. Vorrichtung nach einem der Ansprüche 1 bis 3, **dadurch gekennzeichnet, dass** das Gehäuse (100) durch einen Käfig gebildet ist, der eine fest mit der Buchse (120) verbundene Bodenwand (102) aufweist, welche senkrecht zu derselben verläuft.

5. Vorrichtung nach Anspruch 1, **dadurch gekennzeichnet, dass** das Gehäuse (100) eine Buchse (120) mit einem mittigen inneren Kanal (122) mit einem zu dem Durchmesser des Schenkels (420) des Hebels (400) komplementären Durchmesser, welcher das funktionsgemäße Schwenken der Vorrichtung gewährleistet.

6. Vorrichtung nach Anspruch 1, **dadurch gekennzeichnet, dass** das Gehäuse (100) mehrere elastische Zungen (110)-(112) aufweist, die zum Halten des Widerstandselements (200) geeignet sind.

7. Vorrichtung nach Anspruch 6, **dadurch gekennzeichnet, dass** die elastischen Zungen (110)-(112) zum Halten des Widerstandselements (200) sich senkrecht zu der Bodenwand (102) und parallel zur Achse der Buchse (120) erstrecken, welche den Arm (300) schwenkbar aufnimmt, um das Zusammengreifen der Gesamtheit der Vorrichtungsbauteile in einer zur Schwenkachse (O-O) des Arms (300) parallelen Bewegungsrichtung zu ermöglichen.

8. Vorrichtung nach Anspruch 1, **dadurch gekennzeichnet, dass** der Arm (300) einen in Bezug auf die Achse (O-O) radialen Ansatz (320) aufweist, der mit Einrichtungen zum Fixieren eines Schenkels (410) des Hebels (400) versehen ist.

9. Vorrichtung nach Anspruch 8, **dadurch gekennzeichnet, dass** die Fixiereinrichtungen (330) durch elastische Klemmen gebildet sind, die an dem Arm (300) angeformt sind.
